# EUROPEAN PATENT SPECIFICATION

(11) **EP 2 121 534 B1**
(45) Date of publication and mention of the grant of the patent: **11.07.2012**
(21) Application number: 07869527.7
(22) Date of filing: 19.12.2007
(51) Int. Cl.: C03C 27/12, C03C 17/28, C03C 17/32

(54) **SINGLE PANE GLAZING LAMINATES**
EINSCHEIBEN-VERBUNDGLAS
STRATIFIÉS VITRÉS À FEUILLE UNIQUE

(30) Priority: 03.01.2007 US 619447
(43) Date of publication of application: 25.11.2009
(73) Proprietor: 3M Innovative Properties Company, Saint Paul, MN 55133-3427 (US)
(72) Inventor: PADIYATH, Raghunath,, Saint Paul, Minnesota 55133-3427 (US); SETH, Jayshree,, Saint Paul, Minnesota 55133-3427 (US)
(74) Representative: Vossius & Partner
(86) International application number: PCT/US2007/088131
(87) International publication number: WO 2008/085680

(56) References cited:
- EP-A1- 1 419 999
- WO-A1-2004/000549
- US-A1- 2002 086 926
- US-A1- 2004 028 953
- US-B1- 6 352 761
- US-B2- 6 910 729
- US-B2- 7 135 219

## Description

The present disclosure relates generally to single pane glazing laminates and a method of forming the same.

The need for energy efficient windows and glazing systems is known. The choice of a particular type of window depends of a number of factors including UV, visible and optical performance, aesthetics and climatic conditions. In cooling dominated climates, a glazing unit having low solar heat gain coefficient and low insulating properties may be adequate while in heating dominated climates a moderate solar heat gain along with high insulating properties are needed.

In residences and commercial buildings located in coastal areas tempered glass is needed to withstand high wind and mechanical stresses. In many such locations, state and local laws require the use of laminated glass that offer increased mechanical performance against ballistic and high pressure impacts as seen with small missiles and hurricanes. Puncture and tear resistant films are applied to non heat strengthened glass to provide safety and protection.

Low emissivity (Low-e) coatings reflect mid to far infrared energy and are used in insulated glazing units. Low-e windows are especially useful in heating dominated climates. Two types of Low-e coatings exist. Pyrolytic Low-e coatings, commonly referred to as "hard coats" are applied during the manufacture of glass while sputtered Low-e coatings are applied in a vacuum process, commonly referred to as "soft coats", after the glass plate is manufactured. The hard Low-e coatings are more durable and may be stored indefinitely prior to window manufacture. The soft coats typically comprise silver or silver alloys and are easily attacked by the atmospheric elements such as moisture, salt and water. Furthermore, during the construction of the window, a practice known as "edge deletion" is performed to reduce the coating edge from such attacks.

The present disclosure relates to single pane solar control glazing laminates and methods of forming the same. In particular, the present disclosure is directed to a single pane solar control glazing laminate that includes a first glazing substrate and a first lamination layer that is disposed on the first glazing substrate. A second glazing substrate is disposed on a second lamination layer. A multilayer polymeric infrared light reflecting film is laminated between the first lamination layer and a second lamination layer. A pyrolytic Low-e coating is disposed on an outer surface of the first and/or second glazing substrate. In some embodiments, an infrared light absorbing nanoparticle layer is disposed between the multilayer polymeric infrared light reflecting film and one of the glazing substrates.

In a first embodiment, a single pane glazing unit includes a first glass substrate having a first inner surface and a first outer surface, a second glass substrate having a second inner surface and a second outer surface, and a pyrolytic Low-e coating disposed on the second outer surface, and a multilayer polymeric infrared light reflecting film laminated between the first inner surface and the second inner surface, forming a single pane glazing unit.

In another embodiment, a method of manufacturing a single pane glazing unit includes providing a first glass substrate having a first inner surface and a first outer surface, providing a second glass substrate having a second inner surface and a second outer surface, and a pyrolytic Low-e coating disposed on the second outer surface, and laminating a multilayer polymeric infrared light reflecting film between the first inner surface and the second inner surface, forming a single pane glazing unit.

### BRIEF DESCRIPTION OF THE DRAWINGS

The invention may be more completely understood in consideration of the following detailed description of various embodiments of the invention in connection with the accompanying drawings, in which:

FIG. 1 is a schematic cross-sectional view of an illustrative solar control glazing laminate; and

**FIG. 2** is a schematic cross-sectional view of another illustrative solar control glazing laminate.

The figures are not necessarily to scale. Like numbers used in the figures refer to like components. However, it will be understood that the use of a number to refer to a component in a given figure is not intended to limit the component in another figure labeled with the same number.

In the following description, reference is made to the accompanying drawings that form a part hereof, and in which are shown by way of illustration several specific embodiments. It is to be understood that other embodiments are contemplated and may be made without departing from the scope or spirit of the present invention. The following detailed description, therefore, is not to be taken in a limiting sense.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

The term "polymer" will be understood to include polymers, copolymers (e.g., polymers formed using two or more different monomers), oligomers and combinations thereof, as well as polymers, oligomers, or copolymers that can be formed in a miscible blend.

The term "single pane" glazing refers to a glazing that if formed of at least two glazing layers that are laminated together with one ore more interlayers disposed between the glazing layers to form a solid monolithic glazing unit.

This disclosure relates to single pane solar control glazing laminates and methods of forming the same. In particular, the present disclosure is directed to a single pane solar control glazing laminate that includes a first glazing substrate and a first lamination layer that is disposed on the first glazing substrate. A second glazing substrate is disposed on a second lamination layer. A multilayer polymeric infrared light reflecting film is laminated between the first lamination layer and a second lamination layer. A pyrolytic Low-e coating is disposed on an outer surface of the first and/or second glazing substrate. In some embodiments, an infrared light absorbing nanoparticle layer is disposed between the multilayer polymeric infrared light reflecting film and one of the glazing substrates. While the present invention is not so limited, an appreciation of various aspects of the invention will be gained through a discussion of the examples provided below.

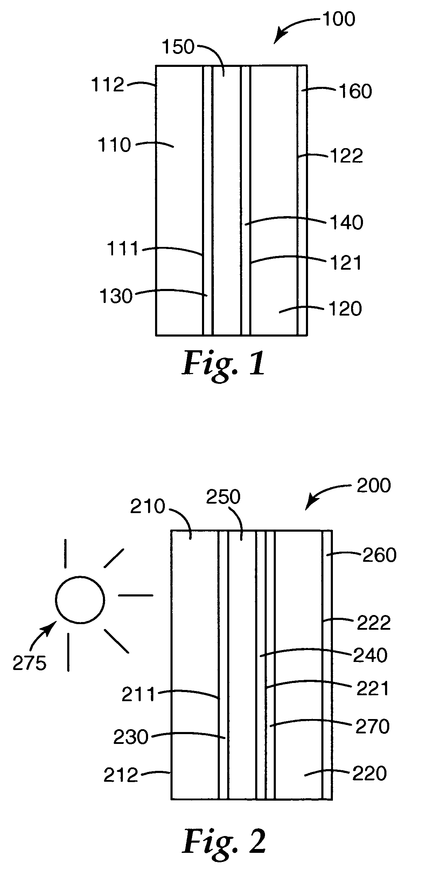

**FIG. 1** is a schematic cross-section of a single pane glazing unit **100.** The single pane glazing unit or laminate **100** includes a first glazing substrate **110** and a second glazing substrate **120.** The first glazing substrate **110** includes an inner surface **111** and an outer surface **112.** The second glazing substrate **120** includes an inner surface **121** and an outer surface **122.** In this, first and second are arbitrary and are not intended to indicate upper or lower, inside or outside or any other particular possible orientation or configuration.

A first lamination layer **130** is disposed adjacent to the first glazing substrate **110** inner surface **111** and a second lamination layer **140** is disposed adjacent to the second glazing substrate **120** inner surface **121.** A multilayer polymeric infrared light reflecting film **150** is disposed between first lamination layer **130** and second lamination layer **140**. A pyrolytic Low-e coating **160** is disposed on the second outer surface **122**.

The first lamination layer **130** and the second lamination layer **140** can be formed of any material that allow the substrate **110** and **120** to be laminated to the multilayer polymeric infrared light reflecting film **150**. In many embodiments, the first lamination layer **130** and the second lamination layer **140** can be formed from a variety of materials that will be familiar to those skilled in the art, including polyvinyl butyral ("PVB"), polyurethane ("PUR"), polyvinyl chloride, polyvinyl acetal, polyethylene, ethylene vinyl acetates and SURLYN® resins (E. 1. duPont de Nemours & Co.). In some embodiments, the lamination layer is UV or e-beam curable. PVB is one preferred material for the lamination layer. Polyurethane lamination layers are described in, for example, U.S. 4,041,208 and U.S. 3,965,057, each of which are incorporated by reference to the extent they do not conflict with the present disclosure. UV or e-beam curable lamination layer material is commercially available from the Sartomer Company under the tradenames CN3100 or CN3105. The thickness of the lamination layer will depend upon the desired application, but can be around 0.3 mm to around 1 mm.

The single pane glazing laminate **100** may be formed by assembling and then laminating the individual components except that the pyrolytic Low-e coating **160** is deposited onto the second outer surface **122**. The first lamination layer **130** may be disposed along the first glazing substrate **110**. The multilayer polymeric infrared light reflecting film **150** may be placed in contact with the first lamination layer **130**. The second lamination layer **140** may be placed in contact with the multilayer polymeric infrared light reflecting film **150**, and the second glazing substrate **120** may be disposed in contact with the second lamination layer **140**.

The single pane glazing laminate **100** may be configured to be substantially clear in appearance, having a haze value of less than 5 or even a haze value of less than 2. In some cases, the single pane glazing laminate **100** may be configured to be transparent or at least substantially transparent to visible light, having a visible light transmission of greater than 50 percent, or 70 percent, or greater than 72 percent. The single pane glazing laminate **100** may be configured to have a solar heat gain coefficient of less than 0.6 and a U-value of less than 0.7. Methods for determining these values are described in the example section below.

**FIG. 2** is a schematic cross-section of another single pane glazing unit **200**. The single pane glazing unit or laminate **200** includes a first glazing substrate **210** (described above) and a second glazing substrate **220** (described above). The first glazing substrate **210** includes an inner surface **211** and an outer surface **212**. The second glazing substrate **220** includes an inner surface **221** and an outer surface **222**. In this, first and second are arbitrary and are not intended to indicate upper or lower, inside or outside or any other particular possible orientation or configuration. A first lamination layer **230** (described above) is disposed adjacent to the first glazing substrate **210** inner surface **211** and a second lamination layer **240** (described above) is disposed adjacent to the second glazing substrate **220** inner surface **221**. A multilayer polymeric infrared light reflecting film **250** is disposed between first lamination layer **230** and second lamination layer **240**. A pyrolytic Low-e coating **260** is disposed on the second outer surface **222**. An infrared light absorbing nanoparticle layer **270** is disposed between the second inner surface **221** and the multilayer polymeric infrared light reflecting film **250**. An infrared light source **275** is shown adjacent to the first glazing substrate **210**.

The single pane glazing laminate **200** may be formed by assembling and then laminating the individual components except that the pyrolytic Low-e coating **260** is deposited onto the second outer surface **222**. The first lamination layer **230** may be disposed along the first glazing substrate **210**. The multilayer polymeric infrared light reflecting film **250** may be placed in contact with the first lamination layer **230**. The second lamination layer **240** may be placed in contact with the multilayer polymeric infrared light reflecting film **250**, and the second glazing substrate **220** may be disposed in contact with the second lamination layer **240**. The infrared light absorbing nanoparticle layer **270** can be coated or disposed on either the second lamination layer **240** or the multilayer polymeric infrared light reflecting film **250**.

The infrared light absorbing nanoparticle layer **270** can include a polymeric binder layer and infrared light absorbing nanoparticles disposed or dispersed within the polymeric binder layer. In some instances, the polymeric binder layer may be separately formed and then subsequently disposed along the multilayer polymeric infrared light reflecting film **250**. In some cases, the polymeric binder layer is coated onto the multilayer polymeric infrared light reflecting film **250**. In some instances, the multilayer polymeric infrared light reflecting film **250** may be subjected to a corona treatment, resulting in a thin surface treatment layer. In some cases, the multilayer polymeric infrared light reflecting film **250** may be subjected to a nitrogen corona treatment at a rate of about 1 Joule per square centimeter. This corona treatment has been found to increase the adhesion of the laminate layers such that these laminate layers do not delaminate during processing. In some cases, an adhesion promotion layer may be coated on the multilayer polymeric infrared reflecting film prior to coating infrared absorbing nanoparticle layer. Adhesion promotion layers are well known to those skilled in the art.

The first glazing substrate and the second glazing substrate may be formed of any suitable glazing material. In some instances, the glazing substrates may be selected from a material that possesses desirable optical properties at particular wavelengths including visible light. In some cases, the glazing substrates may be selected from materials that transmit substantial amounts of light within the visible spectrum. In some instances, the first glazing substrate and/or the second glazing substrate may each be selected from materials such as glass, quartz, sapphire, and the like. In particular instances, the first glazing substrate and the second glazing substrate are both glass.

In many embodiments, the first glazing substrate and a second glazing substrate are formed of the same material and posses the same, similar, or substantially similar physical, optical, or solar control properties. For example, the first glazing substrate and a second glazing substrate can both be formed of either clear glass or green tint glass. In some embodiments, the first glazing substrate and a second glazing substrate are formed of the different material and posses the different physical, optical, or solar control properties. For example, the first glazing substrate can be formed of clear glass and a second glazing substrate can both be formed of green tint glass.

The first glazing substrate and the second glazing substrate may be either planar or non-planar. Planar glazing substrates may be used if, for example, the solar control glazing laminate is intended as a window glazing unit. Vehicular uses such as automotive windshields, side windows and rear windows may suggest the use of non-planar glazing substrates. If desired, and depending on the intended use of the solar control glazing laminate, the first glazing substrate and/or the second glazing substrate may include additional components such as tints, scratch-resistant coatings, and the like.

The pyrolitically applied Low-e coating can include materials such as tin oxide or doped tin oxide (e.g., fluorine doped tin oxide) and can be referred to as "hard coats". These Low-e coatings improve the U-value of glazing units. The sputtered "soft coats," described above, are more difficult to temper. The pyrolytic Low-e coatings on the other hand can be easily tempered and may be applied on an outer glazing surface of a single pane window glazing unit. Sputtered Low-e coatings cannot be used in a single pane application due to issues related to environmental durability. Typically, sputtered Low-e coatings have lower emissivity and the windows constructed from the sputter coated glass have lower U-value. They can also be designed to provide very low solar heat gain. Pyrolitic LowE coatings, on the other hand, are cheaper and provide a moderate level of U-value and higher solar heat gain.

As discussed above, the single pane glazing laminate includes a first lamination layer and a second lamination layer. In some embodiments, these lamination layers are at least partially formed of polyvinyl butyral. Each of these polyvinyl butyral layers may be formed via known aqueous or solvent-based acetalization process in which polyvinyl alcohol is reacted with butyraldehyde in the presence of an acidic catalyst. In some instances, the polyvinyl butyral layers may include or be formed from polyvinyl butyral that is commercially available from Solutia Incorporated, of St. Louis MO, under the trade name BUTVAR® resin.

In some instances, the polyvinyl butyral layers may be produced by mixing resin and (optionally) plasticizer and extruding the mixed formulation through a sheet die. If a plasticizer is included, the polyvinyl butyral resin may include about 20 to 80 or perhaps about 25 to 60 parts of plasticizer per hundred parts of resin. Examples of suitable plasticizers include esters of a polybasic acid or a polyhydric alcohol. Suitable plasticizers are triethylene glycol bis(2-ethylbutyrate), triethylene glycol di-(2-ethylhexanoate), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, polymeric plasticizers such as the oil-modified sebacic alkyds, and mixtures of phosphates and adipates such as disclosed in U.S. Pat. No. 3,841,890 and adipates such as disclosed in U.S. Pat. No. 4,144,217.

In many embodiments, the multilayer polymeric infrared light reflecting film is a multilayer optical film. The layers have different refractive index characteristics so that some light is reflected at interfaces between adjacent layers. The layers are sufficiently thin so that light reflected at a plurality of the interfaces undergoes constructive or destructive interference in order to give the film the desired reflective or transmissive properties. For optical films designed to reflect light at ultraviolet, visible, near-infrared, or infrared wavelengths, each layer generally has an optical thickness (i.e., a physical thickness multiplied by refractive index) of less than about 1 micrometer. Thicker layers can, however, also be included, such as skin layers at the outer surfaces of the film, or protective boundary layers disposed within the film that separate packets of layers.

The reflective and transmissive properties of the multilayer polymeric infrared light reflecting film are a function of the refractive indices of the respective layers (i.e., microlayers). Each layer can be characterized at least in localized positions in the film by in-plane refractive indices nₓ, n_{y}, and a refractive index n_{z} associated with a thickness axis of the film. These indices represent the refractive index of the subject material for light polarized along mutually orthogonal x-, y-, and z-axes, respectively. In practice, the refractive indices are controlled by judicious materials selection and processing conditions. The multilayer polymeric infrared light reflecting film can be made by coextrusion of typically tens or hundreds of layers of two alternating polymers A, B, followed by optionally passing the multilayer extrudate through one or more multiplication dies, and then stretching or otherwise orienting the extrudate to form a final film. The resulting film is composed of typically tens or hundreds of individual layers whose thicknesses and refractive indices are tailored to provide one or more reflection bands in desired region(s) of the spectrum, such as in the visible, near infrared, and/or infrared. In order to achieve high reflectivities with a reasonable number of layers, adjacent layers preferably exhibit a difference in refractive index for light polarized along the x-axis of at least 0.05. In some embodiments, if the high reflectivity is desired for two orthogonal polarizations, then the adjacent layers also exhibit a difference in refractive index for light polarized along the y-axis of at least 0.05. In other embodiments, the refractive index difference can be less than 0.05 or 0 to produce a multilayer stack that reflects normally incident light of one polarization state and transmits normally incident light of an orthogonal polarization state.

If desired, the refractive index difference between adjacent layers for light polarized along the z-axis can also be tailored to achieve desirable reflectivity properties for the p-polarization component of obliquely incident light. For ease of explanation, at any point of interest on a multilayer optical film the x-axis will be considered to be oriented within the plane of the film such that the magnitude of Δnₓ is a maximum. Hence, the magnitude of Δn_{y} can be equal to or less than (but not greater than) the magnitude of Δnₓ. Furthermore, the selection of which material layer to begin with in calculating the differences Δnₓ, Δn_{y}, Δn_{z} is dictated by requiring that Δnₓ be non-negative. In other words, the refractive index differences between two layers forming an interface are Δnj = n₁ⱼ - n₂ⱼ, where j = x, y, or z and where the layer designations 1, 2 are chosen so that n₁ₓ ≥ n₂ₓ., i.e., Δnx ≥ 0.

To maintain high reflectivity of p-polarized light at oblique angles of incidence, the z-index mismatch Δn_{z} between layers can be controlled to be substantially less than the maximum in-plane refractive index difference Δnₓ, such that Δn_{z} ≤ 0.5*Δnₓ. More preferably, Δn_{z} ≤ 0.25*Δnₓ. A zero or near zero magnitude z-index mismatch yields interfaces between layers whose reflectivity for p-polarized light is constant or near constant as a function of incidence angle. Furthermore, the z-index mismatch Δn_{z} can be controlled to have the opposite polarity compared to the in-plane index difference Δnₓ , i.e. Δn_{z} < 0. This condition yields interfaces whose reflectivity for p-polarized light increases with increasing angles of incidence, as is the case for s-polarized light.

Multilayer optical films have been described in, for example, US Patent 3,610,724 (Rogers); US Patent 3,711,176 (Alfrey, Jr. et al.), "Highly Reflective Thermoplastic Optical Bodies For Infrared, Visible or Ultraviolet Light"; US Patent 4,446,305 (Rogers et al.); US Patent 4,540,623 (Im et al.); US Patent 5,448,404 (Schrenk et al.); US Patent 5,882,774 (Jonza et al.) "Optical Film"; US Patent 6,045,894 (Jonza et al.) "Clear to Colored Security Film"; US Patent 6,531,230 (Weber et al.) "Color Shifting Film"; PCT Publication WO 99/39224 (Ouderkirk et al.) "Infrared Interference Filter"; and US Patent Publication 2001/0022982 A1 (Neavin et al.), "Apparatus For Making Multilayer Optical Films", all of which are incorporated herein by reference. In such polymeric multilayer optical films, polymer materials are used predominantly or exclusively in the makeup of the individual layers. Such films can be compatible with high volume manufacturing processes, and may be made in large sheets and roll goods.

The multilayer polymeric infrared light reflecting film can be formed by any useful combination of alternating polymer type layers. In many embodiments, at least one of the alternating polymer layers is birefringent and oriented. In some embodiments, one of the alternating polymer layer is birefringent and orientated and the other alternating polymer layer is isotropic. In one embodiment, the multilayer optical film is formed by alternating layers of a first polymer type including polyethylene terephthalate (PET) or copolymer of polyethylene terephthalate (coPET) and a second polymer type including poly(methyl methacrylate) (PMMA) or a copolymer of poly(methyl methacrylate) (coPMMA). In another embodiment, the multilayer polymeric infrared light reflecting film is formed by alternating layers of a first polymer type including polyethylene terephthalate and a second polymer type including a copolymer of poly(methyl methacrylate and ethyl acrylate). In another embodiment, the multilayer polymeric infrared light reflecting film is formed by alternating layers of a first polymer type including a glycolated polyethylene terephthalate (PETG - a copolymer ethylene terephthalate and a second glycol moiety such as, for example, cyclohexanedimethanol) or a copolymer of a glycolated polyethylene terephthalate (coPETG) and second polymer type including polyethylene naphthalate (PEN) or a copolymer of polyethylene naphthalate (coPEN). In another embodiment, the multilayer polymeric infrared light reflecting film is formed by alternating layers of a first polymer type including polyethylene naphthalate or a copolymer of polyethylene naphthalate and a second polymer type including poly(methyl methacrylate) or a copolymer of poly(methyl methacrylate). Useful combination of alternating polymer type layers are disclosed in US 6,352,761, which is incorporated by reference herein.

As discussed above with respect to FIG. 2, the single pane laminate can also include a polymeric binder layer with infrared light absorbing nanoparticles dispersed therein. In many embodiments, the polymeric binder layer may include both polyester and multi-functional acrylate, curable acrylate, and/or acrylate/epoxy materials.

Polyesters that are suitable for use in forming the polymeric binder layer may include carboxylate and glycol subunits and may be generated by reactions of carboxylate monomer molecules with glycol monomer molecules. Each carboxylate monomer molecule has two or more carboxylic acid or ester functional groups and each glycol monomer molecule has two or more hydroxy functional groups. The carboxylate monomer molecules may all be the same or there may be two or more different types of molecules. The same applies to the glycol monomer molecules. Also included within the term "polyester" are polycarbonates derived from the reaction of glycol monomer molecules with esters of carbonic acid.

Suitable carboxylate monomer molecules include, for example, 2,6-naphthalene dicarboxylic acid and isomers thereof; terephthalic acid; isophthalic acid; phthalic acid; azelaic acid; adipic acid; sebacic acid; norbornene dicarboxylic acid; bi-cyclooctane dicarboxylic acid; 1,6-cyclohexane dicarboxylic acid and isomers thereof; t-butyl isophthalic acid, trimellitic acid, sodium sulfonated isophthalic acid; 2,2'-biphenyl dicarboxylic acid and isomers thereof; and lower alkyl (C₁₋₁₀ linear or branched) esters of these acids, such as methyl or ethyl esters.

Suitable glycol monomer molecules include ethylene glycol; propylene glycol; 1,4-butanediol and isomers thereof; 1,6-hexanediol; neopentyl glycol; polyethylene glycol; diethylene glycol; tricyclodecanediol; 1,4-cyclohexanedimethanol and isomers thereof; norbornanediol; bicyclo-octanediol; trimethylol propane; pentaerythritol; 1,4-benzenedimethanol and isomers thereof; bisphenol A; 1,8-dihydroxy biphenyl and isomers thereof; and 1,3-bis (2-hydroxyethoxy)benzene.

A useful polyester is polyethylene terephthalate (PET). A PET having an inherent viscosity of 0.74 dL/g is available from Eastman Chemical Company of Kingsport, Tennessee. A useful PET having an inherent viscosity of 0.854 dL/g is available from E. 1. DuPont de Nemours & Co., Inc.

The polymeric binder layer can also include multi-functional acrylate segments. Specific examples include those prepared from free-radically polymerizable acrylate monomers or oligomers such as described in U.S. Pat. No. 5,252,694 at col. 5, lines 35-68, and U.S. Patent No. 6,887,917, col. 3, line 61 to col. 6, line 42, which are incorporated by reference herein. The polymeric binder layer can also include curable acrylate and acrylate/epoxy material, such as those described in U.S. Patent No. 6,887,917 and U.S. Patent No. 6,949,297, which are incorporated by reference herein.

The polymeric binder layer includes infrared radiation absorbing nanoparticles dispersed through the polymeric binder layer. The infrared radiation absorbing nanoparticles may include any material that preferentially absorbs infrared radiation. Examples of suitable materials include metal oxides such as tin, antimony, indium and zinc oxides and doped oxides. In some instances, the metal oxide nanoparticles include, tin oxide, antimony oxide, indium oxide, indium doped tin oxide, antimony doped indium tin oxide, antinomy tin oxide, antimony doped tin oxide or mixtures thereof. In some embodiments, the metal oxide nanoparticles include antimony oxide (ATO) and/or indium tin oxide (ITO). In some cases, the infrared radiation absorbing nanoparticles may include or be made of lanthanum hexaboride, or LaB6.

Lanthanum hexaboride is an effective near IR (NIR) absorber, with an absorption band centered on 900 nm. The infrared radiation absorbing nanoparticles can be sized such that they do not materially impact the visible light transmission of the polymeric binder layer. In some instances, the infrared radiation absorbing nanoparticles may have any useful size such as, for example, 1 to 100, or 30 to 100, or 30 to 75 nanometers.

The single pane glazings described herein can be prepared by placing the lamination layers layers between the glass substrate layers and placing the multilayer polymeric infrared light reflecting film between the lamination layers, eliminating air from the engaging surfaces, and then subjecting the assembly to elevated temperature and pressure in an autoclave to fusion bond the structure into a single pane glazing unit that is an optically clear structure. The resulting single pane glazing unit can be used, for example, in a dwelling or vehicle.

### EXAMPLES

The following materials were used in the Examples, where indicated:

CM 875: a 2 mil (nominal) Quarter wave multilayer IR reflecting film comprising 224 alternating layers of PET and coPMMA as described in US 6,797,396 (for example, see Example 5).

PR70: Prestige series multilayer IR reflecting window film commercially available from 3M Company.

Sungate® 500: Pyrolitic low e coated glass (low e coating on one surface) available from PPG Industries, PA.

Clear glass: 2mm or 6mm clear glass available from PPG Industries.

Several laminated stacks were prepared by sandwiching a film sample (Interlayer) between 2 sheets of 0.38mm Saflex RK 11 PVB (polyvinylbutyral available from Solutia, St. Louis MO), and then placing the sandwich between one piece of clear glass and one piece of Sungate® 500. The surface of the Sungate® 500 having a low e-coating was either placed adjacent to the PVB or opposite to the PVB. The laminated stack was then heated in air to 90°C for 10 minutes, and then nip rolled to remove entrained air. The laminated stacks were then autoclaved (autoclave available from Lorimer Corporation) in the following cycle: ramp from 0 psig and 21°C (70°F) to 140 psig and 138°C (280°F) in 25 minutes, hold for 30 minutes, cool to 38°C (100°F) in 40 minutes using an external fan, vent pressure to 0 psig.

Optical spectra were measured using a Lambda 19 spectrophotometer (Perkin Elmer, Boston, MA). The spectra were imported into Optics5 and Window 5.2 programs available from Lawrence Berkeley National Laboratories for analyzing thermal and optical properties of glazing systems. Performance characteristics such as visible light transmission (Tvis), solar heat gain coefficient (SHGC) and U-value, are determined using the Window 5.2 program. The programs can be downloaded from http://windows.lbl.gov/software/. In all cases, the Sungate® 500 substrate is considered to be located on the interior of a structure, and the clear glass is considered to be located on the exterior of a structure. The results of these measurements are shown in Table 1.

**Table 1**

| | **Clear Glass** (thickness) | **Sungate**® **500** (Low-e coating location) | **Interlayer** | **Tᵥᵢₛ** | **SHGC** | **U-value (Btu/hr-ft² F)** |
|---|---|---|---|---|---|---|
| 1 | 6mm | opposite PVB | 30 mil PVB | 80 | 0.62 | 0.68 |
| 2 | 6mm | opposite PVB | CM 875 | 70 | 0.51 | 0.66 |
| 3 | 6mm | opposite PVB | PR 70 | 57 | 0.41 | 0.66 |
| 4 | 2mm | adjacent PVB | CM 875 | 73 | 0.56 | 0.72 |
| 5 | 2mm | opposite PVB | CM 875 | 72 | 0.52 | 0.56 |

Thus, embodiments of the SINGLE PANE GLAZING LAMINATES are disclosed. One skilled in the art will appreciate that embodiments other than those disclosed are envisioned. The disclosed embodiments are presented for purposes of illustration and not limitation, and the present invention is limited only by the claims that follow.

## Claims

1. A single pane glazing unit comprising:
a first glass substrate having a first inner surface and a first outer surface;
a second glass substrate having a second inner surface and a second outer surface, and a pyrolytic Low-e coating disposed on the second outer surface; and
a multilayer polymeric infrared light reflecting film laminated between the first inner surface and the second inner surface, forming a single pane glazing unit.

2. A single pane glazing unit according to claim 1, wherein the pyrolytic Low-e coating comprises tin oxide or doped tin oxide.

3. A single pane glazing unit according to claim 1, further comprising at least a first lamination layer laminated between the first inner surface and the multilayer polymeric infrared light reflecting film.

4. A single pane glazing unit according to claim 1, further comprising at least a first lamination layer comprising polyvinyl butyral laminated between the first inner surface and the multilayer polymeric infrared light reflecting film and a second lamination layer comprising polyvinyl butyral laminated between the second inner surface and the multilayer polymeric infrared light reflecting film.

5. A single pane glazing unit according to claim 1, wherein the single pane glazing unit has a visible light transmission value of greater than 50%, a solar heat gain coefficient of less than 0.6 and a U-value less than 0.7.

6. A single pane glazing unit according to claim 1, further comprising a infrared light absorbing nanoparticle layer disposed between the second inner surface and the multilayer polymeric infrared light reflecting film.

7. A single pane glazing unit according to claim 6, wherein the infrared absorbing nanoparticle layer comprises lanthanum hexaboride, antimony tin oxide or indium tin oxide.

8. A single pane glazing unit according to claim 1, wherein the multilayer polymeric infrared light reflecting film comprises a plurality of alternating polymeric layers of a first polymer material and a second polymer material and at least one of the alternating layers is birefringent and orientated and the alternating polymeric layers cooperate to reflect infrared light.

9. A method of manufacturing a single pane glazing unit comprising:
providing a first glass substrate having a first inner surface and a first outer surface;
providing a second glass substrate having a second inner surface and a second outer surface, and a pyrolytic Low-e coating disposed on the second outer surface; and
laminating a multilayer polymeric infrared light reflecting film between the first inner surface and the second inner surface, forming a single pane glazing unit.

10. A method according to claim 9, wherein the laminating step comprises laminating a multilayer polymeric infrared light reflecting film between the first inner surface and the second inner surface by applying heat and pressure to the first glass substrate and the second glass substrate.

11. A method according to claim 9, further comprising disposing an infrared light absorbing nanoparticle layer between the second inner surface and the multilayer polymeric infrared light reflecting film, wherein the infrared absorbing nanoparticle layer comprises lanthanum hexaboride, antimony tin oxide or indium tin oxide.

## Patentansprüche

1. Einscheibenverbundglaseinheit, umfassend:
ein erstes Glassubstrat, das eine erste Innenfläche und eine erste Außenfläche aufweist;
ein zweites Glassubstrat, das eine zweite Innenfläche und eine zweite Außenfläche und eine pyrolytische, niedriges e-Beschichtung aufweist, die auf der zweiten Außenfläche angeordnet ist; und
eine mehrschichtige, polymere, Infrarotlicht reflektierende Folie, die zwischen der ersten Innenfläche und der zweiten Innenfläche unter Bildung einer Einscheibenverbundglaseinheit laminiert ist.

2. Einscheibenverbundglaseinheit nach Anspruch 1, wobei die pyrolytische, niedriges e-Beschichtung Zinnoxid oder dotiertes Zinnoxid umfasst.

3. Einscheibenverbundglaseinheit nach Anspruch 1, des Weiteren mindestens eine erste Laminierungsschicht umfassend, die zwischen der ersten Innenfläche und der mehrschichtigen polymeren, Infrarotlicht reflektierenden Folie laminiert ist.

4. Einscheibenverbundglaseinheit nach Anspruch 1, des Weiteren mindestens eine erste Polyvinylbutyral umfassende Laminierungsschicht, die zwischen der ersten Innenfläche und der mehrschichtigen, polymeren, Infrarotlicht reflektierenden Folie laminiert ist, und eine zweite Polyvinylbutyral umfassende Laminierungsschicht umfassend, die zwischen der zweiten Innenfläche und der mehrschichtigen, polymeren, Infrarotlicht reflektierenden Folie laminiert ist.

5. Einscheibenverbundglaseinheit nach Anspruch 1, wobei die Einscheibenverbundglaseinheit einen Durchlässigkeitswert für sichtbares Licht von mehr als 50 %, einen Solarwärmezunahmekoeffizienten von weniger als 0,6 und einen U-Wert von weniger als 0,7 aufweist.

6. Einscheibenverbundglaseinheit nach Anspruch 1, des Weiteren eine Infrarotlicht absorbierende Nanoteilchenschicht umfassend, die zwischen der zweiten Innenfläche und der mehrschichtigen, polymeren, Infrarotlicht reflektierenden Folie angeordnet ist.

7. Einscheibenverbundglaseinheit nach Anspruch 6, wobei die Infrarotlicht absorbierende Nanoteilchenschicht Lanthanhexaborid, Antimonzinnoxid oder Indiumzinnoxid umfasst.

8. Einscheibenverbundglaseinheit nach Anspruch 1, wobei die mehrschichtige, polymere, Infrarotlicht reflektierende Folie mehrere abwechselnde polymere Schichten eines ersten polymeren Materials und eines zweiten polymeren Materials umfasst und mindestens eine der abwechselnden Schichten doppelbrechend und orientiert ist und die abwechselnden polymeren Schichten zusammenwirken, um Infrarotlicht zu reflektieren.

9. Verfahren zum Herstellen einer Einscheibenverbundglaseinheit, umfassend:
das Bereitstellen eines ersten Glassubstrats, das eine erste Innenfläche und eine erste Außenfläche aufweist;
das Bereitstellen eines zweiten Glassubstrats, das eine zweite Innenfläche und eine zweite Außenfläche und eine pyrolytische, niedriges e-Beschichtung aufweist, die auf der zweiten Außenfläche angeordnet ist; und
das Laminieren einer mehrschichtigen, polymeren, Infrarotlicht reflektierenden Folie zwischen der ersten Innenfläche und der zweiten Innenfläche unter Bildung einer Einscheibenverbundglaseinheit.

10. Verfahren nach Anspruch 9, wobei der Laminierungsschritt das Laminieren einer mehrschichtigen, polymeren, Infrarotlicht reflektierenden Folie zwischen der ersten Innenfläche und der zweiten Innenfläche durch Aufbringen von Hitze und Druck auf das erste Glassubstrat und das zweite Glassubstrat umfasst.

11. Verfahren nach Anspruch 9, des Weiteren das Anordnen einer Infrarotlicht absorbierenden Nanoteilchenschicht zwischen der zweiten Innenfläche und der mehrschichtigen, polymeren, Infrarotlicht reflektierenden Folie umfassend, wobei die Infrarot absorbierende Nanoteilchenschicht Lanthanhexaborid, Antimonzinnoxid oder Indiumzinnoxid umfasst.

## Revendications

1. Simple vitrage comprenant :
un premier substrat de verre ayant une première surface intérieure et une première surface extérieure ;
un deuxième substrat de verre ayant une deuxième surface intérieure et une deuxième surface extérieure, et un revêtement pyrolytique à faible émissivité disposé sur la deuxième surface extérieure ; et
un film polymère multicouche réfléchissant le rayonnement infrarouge laminé entre la première surface intérieure et la deuxième surface intérieure, formant un simple vitrage.

2. Simple vitrage selon la revendication 1, dans lequel le revêtement pyrolytique à faible émissivité comprend de l'oxyde d'étain ou de l'oxyde d'étain dopé.

3. Simple vitrage selon la revendication 1, comprenant en outre au moins une première couche de stratification laminée entre la première surface intérieure et le film polymère multicouche réfléchissant le rayonnement infrarouge.

4. Simple vitrage selon la revendication 1, comprenant en outre au moins une première couche de stratification comprenant du polyvinylbutyral laminée entre la première surface intérieure et le film polymère multicouche réfléchissant le rayonnement infrarouge, et une deuxième couche de stratification comprenant du polyvinylbutyral laminée entre la deuxième surface intérieure et le film polymère multicouche réfléchissant le rayonnement infrarouge.

5. Simple vitrage selon la revendication 1, le simple vitrage ayant une valeur de transmission de la lumière visible supérieure à 50 %, un coefficient de gain thermique solaire inférieur à 0,6, et une valeur U inférieure à 0,7.

6. Simple vitrage selon la revendication 1, comprenant en outre une couche de nanoparticules absorbant le rayonnement infrarouge disposée entre la deuxième surface intérieure et le film polymère multicouche réfléchissant le rayonnement infrarouge.

7. Simple vitrage selon la revendication 6, dans lequel la couche de nanoparticules absorbant les infrarouges comprend de l'hexaborure de lanthane, de l'oxyde d'antimoine-étain ou de l'oxyde d'indium-étain.

8. Simple vitrage selon la revendication 1, dans lequel le film polymère multicouche réfléchissant le rayonnement infrarouge comprend une pluralité de couches polymères alternées d'un premier matériau polymère et d'un deuxième matériau polymère, et l'une au moins des couches alternées est biréfringente et orientée et les couches polymères alternées coopèrent pour réfléchir le rayonnement infrarouge.

9. Procédé de fabrication d'un simple vitrage comprenant :
l'obtention d'un premier substrat de verre ayant une première surface intérieure et une première surface extérieure ;
l'obtention d'un deuxième substrat de verre ayant une deuxième surface intérieure et une deuxième surface extérieure, et un revêtement pyrolytique à faible émissivité disposé sur la deuxième surface extérieure ; et
le laminage d'un film polymère multicouche réfléchissant le rayonnement infrarouge entre la première surface intérieure et la deuxième surface intérieure, pour former un simple vitrage.

10. Procédé selon la revendication 9, dans lequel l'étape de laminage comprend le laminage d'un film polymère multicouche réfléchissant le rayonnement infrarouge entre la première surface intérieure et la deuxième surface intérieure par application de chaleur et de pression au premier substrat de verre et au deuxième substrat de verre.

11. Procédé selon la revendication 9, comprenant en outre l'insertion d'une couche de nanoparticules absorbant le rayonnement infrarouge entre la deuxième surface intérieure et le film polymère multicouche réfléchissant le rayonnement infrarouge, la couche de nanoparticules absorbant les infrarouges comprenant de l'hexaborure de lanthane, de l'oxyde d'antimoine-étain ou de l'oxyde d'indium-étain.
